# EUROPEAN PATENT SPECIFICATION

(11) **EP 3 358 210 B1**
(45) Date of publication and mention of the grant of the patent: **18.03.2020**
(21) Application number: 18155086.4
(22) Date of filing: 05.02.2018
(51) Int. Cl.: F16D 13/64

(54) **HEAT DISSIPATION DISC FOR A CLUTCH MECHANISM**
WÄRMEABLEITSCHEIBE FÜR EINEN KUPPLUNGSMECHANISMUS
DISQUE DE DISSIPATION DE CHALEUR POUR MÉCANISME D'EMBRAYAGE

(30) Priority: 06.02.2017 ES 201730108
(43) Date of publication of application: 08.08.2018
(73) Proprietor: XIU RDI, S.L., 17243 Llambilles (Girona) (ES)
(72) Inventor: SERRA ROQUETA, Josep, 17243 LLAMBILLES (Girona) (ES)
(74) Representative: Herrero & Asociados, S.L.

(56) References cited:
- JP-A- H03 239 818
- US-A1- 2002 162 721
- US-B1- 6 360 864

## Description

### Object of the Invention

As expressed in the title of the present specification, the invention relates to a heat dissipation disc for a clutch mechanism which provides its intended function with novel features and advantages that will be described in detail below and entail a significant improvement over the current state of the art within its field of application.

More particularly, the object of the invention focuses on a disc for oil-immersed multi-disc clutch mechanisms, of the type applicable for motorcycles, comprising a pack of discs formed by alternatingly intercalated steel metal discs and friction discs, where some discs have an outer toothing that engages the crankshaft by means of the drum or crown wheel, and others have an inner toothing for engaging the gearshift through the hub, and is innovatively replaced with conventional one-piece steel discs to provide greater heat dissipation capacity, being formed to that end by at least three disc-shaped parts, specifically two outer steel discs and a central ventilated disc made of the same or a different material which separates the outer discs, and the design of which increases the surface area and assures the internal flow of centrifuged oil between said parts, improving the heat dissipation capacity of the assembly.

### Field of Application of the Invention

The field of application of the present invention is comprised within the sector of the industry dedicated to the manufacture of mechanical apparatus and devices for vehicles, focusing on the field of clutch mechanisms, and more particularly multi-disc clutches for motorcycles.

### Background of the Invention

Multi-disc clutches work according to the same principle as conventional clutches, with the exception that they use a "pack" of discs instead of a single disc, where some discs have an outer toothing that engages the crankshaft by means of the "drum" or crown wheel, and other discs, intercalated between the preceding ones, have an inner toothing that engages the gearshift by means of the "hub". In the resting state, a series of coil springs presses on this pack of discs, so the drum and the hub rotate integrally. The use thereof is limited to motorcycles since the torque they transmit to the gearshift is much higher than that produced by the crankshaft due to the primary gear reduction ratio, which is non-existent in an automobile. Therefore, the coupling must be much more progressive, the process being improved as it is submerged in an oil bath that absorbs the heating that is caused by friction and is furthermore distributed among several discs.

In any case, the discs with the outer toothing are usually made of friction materials, hence they are known as friction discs, whereas the discs with the inner toothing intercalated between them are usually steel discs, although there are also clutch mechanisms in which the discs made from friction material and steel have an inverse toothing provided therein.

The problem to be solved by the present invention is derived from the use of the clutch in enduro- and trial-type motorcycles in which the clutch is slipped excessively to achieve greater control of the motorcycle, so the temperature generated in the steel discs and in the oil increases significantly with respect to how it is done in other types of driving, and the heat dissipation capacity of the aforementioned conventional discs is not sufficient for optimal performance of the assembly, where it is desirable to increase said heat dissipation capacity.

Furthermore, another typical problem of these types of motor sports is to produce steel discs that are flat enough so that there is no residual torque when the clutch is open, i.e., slipping; this being very critical in enduro and trial motorcycles in which, as mentioned, a great deal of control of the clutch is required.

The objective of the present invention is therefore to introduce on the market a new type of multi-disc clutch mechanism for motorcycles, particularly devised for enduro- and trial-type motorcycles but without this entailing any limitation, comprising an innovative type of discs that replaces conventional steel discs and optimizes the heat dissipation capacity of the assembly, and furthermore minimizes the difficulty of achieving completely flat discs, preventing the existence of residual torque.

On the other hand and as a reference to the current state of the art, it must be indicated that the applicant at least is unaware of the existence of any other heat dissipation disc for a clutch mechanism or any other invention of similar application having technical, structural and constitutive features identical or similar to the features of the invention herein proposed and claimed.

JPH03239818 A discloses a wet type multiple disc clutch device to increase flow rate of oil so as to improve cooling performance by passing an oil passage which passes through from the inner peripheral side to the outer peripheral side and tilts in such a way that the outer peripheral side comes to the rear of the direction of rotation in plate thickness of a clutch plate or friction plate.

US6360864 B1 discloses a clutch divider plate having a pair of outer plates and a pair of inner rings or members including several notches which allow cooling fluid or oil to pass through the plate, thereby cooling the plate.

US2002162721 A1 discloses an oil cooling arrangement for a stacked plate type clutch assembly including a separator plate between two clutch disc plates. The separator plate assembly has two annular plates lying adjacent one another with at least one shallow channel formed in a plate which defines with the other plate an oil flow passage through the separator assembly.

### Brief Description of the Invention

The heat dissipation disc for a clutch mechanism proposed by the invention is therefore configured as a remarkable novelty within its field of application, since the objectives indicated above are specifically and satisfactorily achieved based on its implementation, the characterizing details thereof which make it possible and which distinguish it being conveniently included in the final claims accompanying the present description.

As pointed out above, the invention proposes a disc intended for being incorporated, in a plural manner, in an oil-immersed multi-disc clutch mechanism, replacing each of the conventional steel metal discs that are intercalated between friction discs (made of friction material), where preferably but without limitation, said friction discs have an outer toothing for engaging the crankshaft by means of the drum or crown wheel, and the other discs, i.e., the discs according to the invention, have an inner toothing for engaging the gearshift through the hub, which disc of the invention is distinguished by being formed in turn by at least three, as there could be more, disc-shaped parts the structural configuration of which provides greater heat dissipation capacity in the assembly of the clutch system.

To that end, said heat dissipation disc proposed by the present invention specifically comprises two outer parts or outer discs made of steel, and one ventilated central part or disc made of the same steel material or a different material, for example, carbon fiber, acting as a spacer between the outer discs, the three discs being attached to one another concentrically like a sandwich, determining an overall thickness which will logically be the same as the thickness of the steel discs they replace in order to fit into the space provided in the drum or crown wheel; therefore the thickness is significantly smaller in each of them, and the central disc preferably having the smallest thickness.

In any case, the central spacer separating disc is a ventilated disc as it has a series of open grooves on its surface with an exit on one of the edges thereof, whereas the outer discs have a series of notches covering part of the grooves of the central disc, such that in addition to providing, all together, a larger extension of surface area to facilitate heat dissipation, the grooves of the central disc provide at the same time a pathway for the passage of the centrifuged oil therethrough, which also facilitates heat dissipation.

All this results in a heat dissipation disc that is particularly useful for when the clutch is slipping due to use in enduro and trial motorcycles in which it is common to slip the clutch, given that a lot of heat is generated in conventional steel discs that do not have sufficient capacity to dissipate the generated heat.

With this solution the surface area for dissipating the generated heat is increased, and a centrifuged oil flow which further improves the heat dissipation capacity is assured at the same time.

Another problem solved by the disc of the invention is the difficulty of producing steel discs that are flat enough so that there is no residual torque when the clutch is open, this also being very critical in enduro and trial motorcycles in which a great deal of clutch control is required.

Since the disc is made from multiple discs of smaller thickness, the complexity involved in attaining a completely flat disc is reduced, and the reduction of the residual torque is therefore greatly improved without the production process being so critical.

By dividing each disc into a sandwich of multiple discs, it also allows using different materials in each of these discs in order to optimize costs.

In view of the foregoing, it can be stated that the described heat dissipation disc for a clutch mechanism represents an innovative structure having structural and constitutive features that were unknown up until now, and these reasons, combined with its practical usefulness, give the invention sufficient grounds for obtaining the exclusive right that is sought.

### Description of the Drawings

To complement the description that is being made and for the purpose of aiding to better understand the features of the invention, a set of drawings is attached to the present specification as an integral part thereof in which the following has been depicted with an illustrative and non-limiting character:

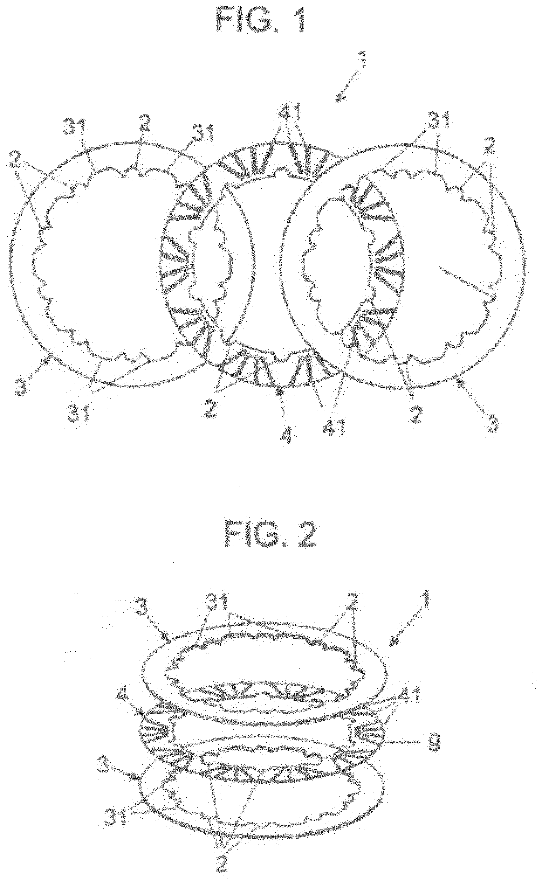

Figure 1 shows an exploded plan view of an example of the heat dissipation disc for a clutch mechanism object of the invention, where the parts and elements the invention comprises can be seen.
Figure 2 shows an also exploded perspective view of the same example of the disc of the invention, where in this case the difference in thickness between the outer discs and the central disc can be seen.
Figure 3 shows a plan view of the same example of the heat dissipation disc according to the invention shown in the preceding drawings, but in this case depicted with the discs attached to and overlapping one another, where the arrangement of the ventilation grooves of the central disc can be seen by means of dashed lines, and with the notches of the outer discs overlapping said grooves, allowing oil to flow therethrough.
Figure 4 shows a section view of the dissipation disc of the invention with the discs the invention comprises attached to one another, according to section A-A indicated in Figure 3.
Figure 5 shows an enlarged view of detail B of the dissipation disc indicated in Figure 4.

### Preferred Embodiment of the Invention

In view of the mentioned drawings and according to the numbering used, a non-limiting embodiment of the heat dissipation disc for the proposed clutch mechanism which comprises the parts and elements indicated and described in detail below, can be seen therein.

In this sense, as seen in said drawings and as indicated in the preceding sections, the dissipation disc (1) in question is applicable for the incorporation thereof, alternatingly intercalated between the friction discs of an oil-immersed multi-disc clutch (which is not depicted as it is a sufficiently known mechanism), being provided with inner or outer toothing (2) for engaging either the crankshaft or the gearshift, having the particularity of being formed from at least two outer discs (3) and a central spacer disc (4) that are attached to one another concentrically like a sandwich, the central disc (4) having a series of open grooves (41) on its surface with an exit on one of the edges thereof, and the outer discs (3) which are completely smooth and solid, i.e., not having grooves, having a plurality of notches (41) on one of the edges thereof, said grooves (41) and said notches (31) determining a surface area on the edges of the dissipation disc (1) which favors heat dissipation.

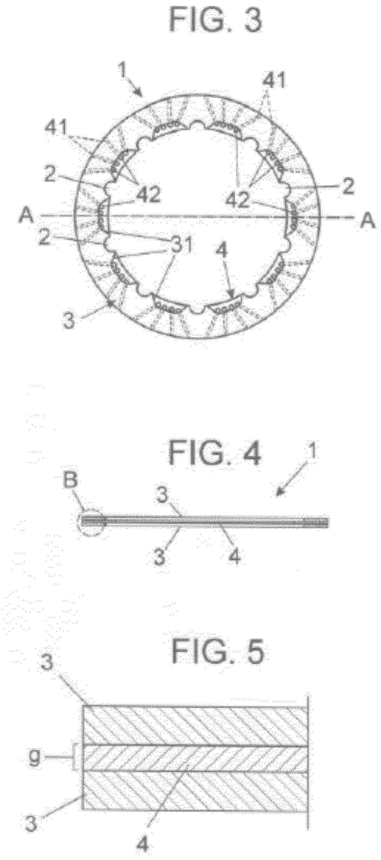

Said notches (31) of the outer discs (3) are furthermore arranged such that they cover part of the grooves (41) of the central disc (4), as seen in Figure 3, specifically covering the starting point (42) of all the grooves (41), i.e., the point opposite the point of exit of the edge on which said grooves (1) in the central disc (4) of the dissipation disc (1) are open to allow oil to flow therethrough.

Preferably, the central spacer disc (4) furthermore has a smaller thickness (g) than the outer discs (3), the latter in turn having a smaller thickness than the conventional disc they replace, and both the discs preferably have the same thickness. In any case, however, the sum of the thickness of the outer discs (3) and the central disc (4), i.e., of the dissipation disc (1), will always be equal to the thickness of said conventional disc which this dissipation disc (1) replaces.

In the preferred embodiment, when the dissipation disc (1) is a disc having an inner toothing (2) for engaging the gearshift through the hub, the point of exit of the grooves (41) of the central spacer disc (4) is on the outer edge thereof and the starting point (42), which is circular and slightly greater than the width of the rest of the groove (41), is located in all of them close to the inner edge of the disc.

More specifically, said starting point (42) of each groove (41) of the central disc (4) is located coinciding with an imaginary circumference close to the inner edge of said disc, and preferably grouped into intermediate segments existing between the spaces of the toothing (2) of said inner edge, the grooves of each of said groups projecting in diverging directions in order to cover the greatest length possible and thereby determine a larger extension of surface area of material through which heat will be dissipated.

The notches (31) of the outer discs (3) are in turn also incorporated on the inner edge thereof, specifically intercalated between the spaces of the notch (2) that said discs (3) also have, with the shape and position coinciding with the spaces of the notches of the central disc (4), such that the starting points (42) of the grooves of the central disc (4) are not covered up by the body of the outer discs (3), but rather are open as they are covered by said notches (31), allowing oil to flow into the grooves (41) which, with the rotation of the discs, is centrifuged towards the point of exit of the grooves located on the outer edge, providing an even more effective heat dissipation.

Finally, it must be pointed out that the outer discs (3) are always made of steel, whereas the central disc (4), while it can also be made of steel, is preferably made of a different material, for example carbon fiber sheet or another similar material in terms of lightweightness and strength.

Having sufficiently described the nature of the present invention as well as the way of putting it into practice, it is not considered necessary to further describe the invention so that a person skilled in the art can comprehend the scope thereof and the advantages derived from it, stating that within its essential nature, the present invention could be carried out to practice in other embodiments differing in detail from that indicated by way of example, and such embodiments would also be granted the protection that is sought provided that the fundamental principle thereof is not altered, changed or modified.

## Claims

1. Heat dissipation disc for a clutch mechanism applicable for the incorporation thereof, alternatingly intercalated between the friction discs of an oil-immersed multi-disc clutch, and being provided with inner or outer toothing (2) for engaging either the crankshaft or the gearshift, being configured from at least two solid outer steel discs (3) and a central spacer disc (4), all of them being attached to one another concentrically like a sandwich; and wherein the central disc (4) has a series of open grooves (41) on its surface with an exit on one of the edges thereof, **characterized in that** the outer discs (3) have a plurality of notches (31) on one of the edges thereof, said grooves (41) and said notches (31) determining a surface area on the edges of the dissipation disc (1).

2. Heat dissipation disc for a clutch mechanism according to claim 1, **characterized in that** the notches (31) of the outer discs (3) are arranged such that they cover part of the grooves (41) of the central disc (4), allowing oil to flow therethrough.

3. Heat dissipation disc for a clutch mechanism according to claim 2, **characterized in that** the notches (31) of the outer discs (3) are arranged such that they cover the starting point (42) of all the grooves (41) of the central spacer disc (4), i.e., the point opposite the point of exit of the edge on which said open grooves (41) in the central disc (4) are located.

4. Heat dissipation disc for a clutch mechanism according to claim 3, **characterized in that** it has an inner toothing (2) for engaging the gearshift through the hub; **in that** the grooves (41) of the central disc (4) have the point of exit on the outer edge thereof and the starting point (42) of all of them close to the inner edge of the disc; and **in that** the notches (31) of the outer discs (3) are also incorporated on the inner edge thereof.

5. Heat dissipation disc for a clutch mechanism according to claim 4, **characterized in that** the starting point (42) of each groove (41) of the central spacer disc (4) is located coinciding with an imaginary circumference close to the inner edge of said disc, grouped into intermediate segments existing between the spaces of the toothing (2) of said inner edge, and the notches (31) of the outer discs (3) are also incorporated on the inner edge thereof, intercalated between the spaces of the notch (2) that said outer discs (3) also have, with the shape and position coinciding with the spaces of the notches (2) of the central disc (4), such that the starting points (42) of the grooves of the central disc (4) are open as they are covered by said notches (31), allowing oil to flow into the grooves (31) which, with the rotation of the discs, is centrifuged towards the point of exit of the grooves located on the outer edge.

6. Heat dissipation disc for a clutch mechanism according to claim 5, **characterized in that** the grooves (41) of each group of starting points (42) project in diverging directions.

7. Heat dissipation disc for a clutch mechanism according to any of claims 3 to 6, **characterized in that** the starting point (42) of the grooves (41) of the central disc (4) is circular and slightly greater than the width of the rest of the groove (41).

8. Heat dissipation disc for a clutch mechanism according to any of claims 1 to 7, **characterized in that** the two outer discs (3) are identical.

9. Heat dissipation disc for a clutch mechanism according to any of claims 1 to 8, **characterized in that** the central disc (4) has a smaller thickness (g) than the outer discs (3).

10. Heat dissipation disc for a clutch mechanism according to any of claims 1 to 9, **characterized in that** the central disc (4) is made of steel.

11. Heat dissipation disc for a clutch mechanism according to any of claims 1 to 9, **characterized in that** the central disc (4) is made of carbon fiber sheet.

## Patentansprüche

1. Wärmeableitungsscheibe für einen Kupplungsmechanismus, die für die Aufnahme darin einsetzbar ist, abwechselnd zwischen den Reibscheiben einer in Öl eingetauchten Mehrscheibenkupplung eingefügt wird und mit einer Innen- oder Außenverzahnung (2) zum Eingriff entweder mit der Kurbelwelle oder der Schaltung versehen ist, wobei sie aus mindestens zwei massiven äußeren Stahlscheiben (3) und einer mittigen Distanzscheibe (4), die alle konzentrisch wie ein Sandwich aneinander angefügt sind, ausgebildet wird, und wobei die mittige Distanzscheibe (4) auf ihrer Oberfläche eine Reihe offener Nuten (41) mit einem Ausgang an einer ihrer Ränder aufweist, **dadurch gekennzeichnet, dass** die äußeren Scheiben (3) eine Vielzahl von Kerben (31) an einem ihrer Ränder aufweisen, wobei die Nuten (41) und die Kerben (31) einen Oberflächenbereich an den Rändern der Ableitungsscheibe (1) bestimmen.

2. Wärmeableitungsscheibe für einen Kupplungsmechanismus nach Anspruch 1, **dadurch gekennzeichnet, dass** die Kerben (31) der äußeren Scheiben (3) derart angeordnet sind, dass sie einen Teil der Nuten (41) der mittigen Scheibe (4) abdecken, wodurch Öl durch sie hindurchfließen kann.

3. Wärmeableitungsscheibe für einen Kupplungsmechanismus nach Anspruch 2, **dadurch gekennzeichnet, dass** die Kerben (31) der äußeren Scheiben (3) derart angeordnet sind, das sie den Anfangspunkt (42) aller Nuten (41) der mittigen Distanzscheibe (4) abdecken, d.h. den Punkt gegenüber dem Punkt des Austritts des Rands, an dem sich die offenen Nuten (41) in der mittigen Scheibe (4) befinden.

4. Wärmeableitungsscheibe für einen Kupplungsmechanismus nach Anspruch 3, **dadurch gekennzeichnet, dass** sie eine Innenverzahnung (2) zum Eingriff mit der Schaltung durch die Nabe aufweist, dass die Nuten (41) der mittigen Scheibe (4) den Punkt des Austritts am äußeren Rand davon und den Anfangspunkt (42) von allen diesen nahe dem inneren Rand der Scheibe aufweisen, und dass die Kerben (31) der äußeren Scheiben (3) ebenfalls am inneren Rand davon eingebracht sind.

5. Wärmeableitungsscheibe für einen Kupplungsmechanismus nach Anspruch 4, **dadurch gekennzeichnet, dass** der Anfangspunkt (42) jeder Nut (41) der mittigen Distanzscheibe übereinstimmend mit einem imaginären Umfang nahe dem inneren Rand der Scheibe angeordnet ist, gruppiert in Zwischensegmente zwischen den Räumen der Verzahnung (2) des inneren Rands, und die Kerben (31) der äußeren Scheiben (3) ebenfalls auf dem inneren Rand davon eingebracht sind, eingefügt zwischen den Räumen der Kerbe (2), die auch die äußeren Scheiben aufweisen, wobei die Form und Position mit den Räumen der Kerben (2) der mittigen Scheibe (4) übereinstimmen, so dass die Anfangspunkte (42) der Nuten der mittigen Scheibe (4) offen sind während sie durch die Kerben (31) abgedeckt sind, wodurch Öl in die Nuten (31) fließen kann, das mit Rotation der Scheiben in Richtung des am äußeren Rand befindlichen Punkts des Austritts der Nuten zentrifugiert wird.

6. Wärmeableitungsscheibe für einen Kupplungsmechanismus nach Anspruch 5, **dadurch gekennzeichnet, dass** die Nuten (41) jeder Gruppe von Anfangspunkten (42) in unterschiedliche Richtungen ragen.

7. Wärmeableitungsscheibe für einen Kupplungsmechanismus nach einem der Ansprüche 3 bis 6, **dadurch gekennzeichnet, dass** der Anfangspunkt (42) der Nuten (41) der mittigen Scheibe (4) rund und etwas größer als die Breite der restlichen Nut (41) ist.

8. Wärmeableitungsplatte für einen Kupplungsmechanismus nach einem der Ansprüche 1 bis 7, **dadurch gekennzeichnet, dass** die zwei äußeren Scheiben (3) identisch sind.

9. Wärmeableitungsscheibe für einen Kupplungsmechanismus nach einem der Ansprüche 1 bis 8, **dadurch gekennzeichnet, dass** die mittige Scheibe (4) eine geringere Dicke (g) als die äußeren Scheiben (3) aufweist.

10. Wärmeableitungsscheibe für einen Kupplungsmechanismus nach einem der Ansprüche 1 bis 9, **dadurch gekennzeichnet, dass** die mittige Scheibe (4) aus Stahl besteht.

11. Wärmeableitungsscheibe für einen Kupplungsmechanismus nach einem der Ansprüche 1 bis 9, **dadurch gekennzeichnet, dass** die zentrale Scheibe (4) aus einer Kohlefaserplatte besteht.

## Revendications

1. Disque de dissipation de chaleur pour un mécanisme d'embrayage applicable pour son incorporation, intercalé en alternance entre les disques de friction d'un embrayage multidisque immergé dans de l'huile et pourvu d'une denture interne ou externe (2) pour venir en prise avec le vilebrequin ou le levier de vitesses, configuré à partir d'au moins deux disques d'acier externes pleins (3) et d'un disque espaceur central (4), tous étant fixés les uns aux autres concentriquement comme un sandwich ; et dans lequel le disque central (4) présente une série de rainures ouvertes (41) sur sa surface avec une sortie sur l'un de leurs bords, **caractérisé en ce que** les disques externes (3) ont une pluralité d'encoches (31) sur l'un de leurs bords, lesdites rainures (41) et lesdites encoches (31) déterminant une zone superficielle sur les bords du disque de dissipation (1).

2. Disque de dissipation de chaleur pour un mécanisme d'embrayage selon la revendication 1, **caractérisé en ce que** les encoches (31) des disques externes (3) sont agencées de telle sorte qu'elles recouvrent une partie des rainures (41) du disque central (4), en permettant à de l'huile de s'écouler à travers celles-ci.

3. Disque de dissipation de chaleur pour un mécanisme d'embrayage selon la revendication 2, **caractérisé en ce que** les encoches (31) des disques externes (3) sont agencées de telle sorte qu'elles recouvrent le point de départ (42) de toutes les rainures (41) du disque espaceur central (4), c'est-à-dire le point opposé au point de sortie du bord sur lequel lesdites rainures ouvertes (41) du disque central (4) sont ménagées.

4. Disque de dissipation de chaleur pour un mécanisme d'embrayage selon la revendication 3, **caractérisé en ce qu'**il présente une denture interne (2) pour venir en prise avec le levier de vitesses à travers le moyeu ; **en ce que** les rainures (41) du disque central (4) ont le point de sortie sur leur bord externe et le point de départ (42) de la totalité d'entre elles est proche du bord interne du disque ; et **en ce que** les encoches (31) des disques externes (3) sont également incorporées sur leur bord interne.

5. Disque de dissipation de chaleur pour un mécanisme d'embrayage selon la revendication 4, **caractérisé en ce que** le point de départ (42) de chaque rainure (41) du disque espaceur central (4) est situé en coïncidence avec une circonférence imaginaire proche du bord interne dudit disque, groupée en segments intermédiaires existant entre les espaces de la denture (2) dudit bord interne, et les encoches (31) des disques externes (3) sont également incorporées sur leur bord interne, intercalées entre les espaces de l'encoche (2) que lesdits disques externes (3) présentent également, avec la forme et la position qui coïncident avec les espaces des encoches (2) dudit disque central (4) de telle sorte que les points de départ (42) des rainures du disque central (4) soient ouverts lorsqu'ils sont recouverts par lesdites encoches (31), en permettant à de l'huile de s'écouler dans les rainures (31), laquelle huile, avec la rotation des disques, est centrifugée vers le point de sortie des rainures situées sur le bord externe.

6. Disque de dissipation de chaleur pour un mécanisme d'embrayage selon la revendication 5, **caractérisé en ce que** les rainures (41) de chaque groupe de points de départ (42) se projettent dans des directions divergentes.

7. Disque de dissipation de chaleur pour un mécanisme d'embrayage selon l'une quelconque des revendications 3 à 6, **caractérisé en ce que** le point de départ (42) des rainures (41) du disque central (4) est circulaire et légèrement supérieur à la largeur du reste de la rainure (41).

8. Disque de dissipation de chaleur pour un mécanisme d'embrayage selon l'une quelconque des revendications 1 à 7, **caractérisé en ce que** les deux disques externes (3) sont identiques.

9. Disque de dissipation de chaleur pour un mécanisme d'embrayage selon l'une quelconque des revendications 1 à 8, **caractérisé en ce que** le disque central (4) a une épaisseur (g) inférieure aux disques externes (3).

10. Disque de dissipation de chaleur pour un mécanisme d'embrayage selon l'une quelconque des revendications 1 à 9, **caractérisé en ce que** le disque central (4) est constitué d'acier.

11. Disque de dissipation de chaleur pour un mécanisme d'embrayage selon l'une quelconque des revendications 1 à 9, **caractérisé en ce que** le disque central (4) est constitué d'une feuille de fibres de carbone.
